# EUROPEAN PATENT APPLICATION

(11) **EP 3 859 547 A1**
(43) Date of publication of application: **04.08.2021**
(21) Application number: 19867227.1
(22) Date of filing: 23.08.2019
(51) Int. Cl.: G06F 16/182, G06F 21/62, G06Q 20/38

(54) **INFORMATION PROCESSING DEVICE, INFORMATION PROCESSING METHOD, AND PROGRAM**

(30) Priority: 26.09.2018 JP 2018179835
(71) Applicant: Sony Group Corporation, Tokyo 108-0075 (JP)
(72) Inventor: TAKAHASHI, Koki, Tokyo 141-0031 (JP); ISOZU, Masaaki, Tokyo 141-0031 (JP); SASAKI, Takehiko, Tokyo 141-0031 (JP)
(74) Representative: 2SPL Patentanwälte PartG mbB
(86) International application number: PCT/JP2019/033051
(87) International publication number: WO 2020/066399

(57) **Abstract**

Provided is an information processing device including: an association processing unit (121b) that, on the basis of first data to be registered in a P2P database (120), controls association of the first data with second data that is to be registered in the P2P database and that is different from the first data.

## Description

### [Technical Field]

The present disclosure relates to an information processing device, an information processing method, and a program.

### [Background Art]

Services that use peer-to-peer databases such as blockchain data are being actively developed in recent years. Bitcoin and the like, in which blockchain data is used to exchange virtual currency, can be given as examples. A service which uses a peer-to-peer database such as blockchain data can prevent data managed in the peer-to-peer database from being tampered with and the like, making it possible to ensure the authenticity of the data.

PTL 1, indicated below, discloses a technique which can appropriately evaluate an evaluation target on the basis of data pertaining to the evaluation target, managed in a peer-to-peer database.

### [Citation List]

### [Patent Literature]

[PTL 1] WO 2017/090329

### [Summary]

### [Technical Problem]

However, with the technique disclosed in PTL 1 and the like, a plurality of instances of data registered in a P2P database cannot be associated appropriately.

Accordingly, the present disclosure has been made in view of the above-described circumstances, and provides a new and improved information processing device, information processing method, and program capable of appropriately associating a plurality of instances of data registered in a P2P database.

### [Solution to Problem]

According to the present disclosure, an information processing device is provided, the information processing device including an association processing unit that, on the basis of first data to be registered in a P2P database, controls association of the first data with second data that is to be registered in the P2P database and that is different from the first data.

Additionally, according to the present disclosure, an information processing method is provided, the information processing method being executed by a computer, and including controlling, on the basis of first data to be registered in a P2P database, association of the first data with second data that is to be registered in the P2P database and that is different from the first data.

Additionally, according to the present disclosure, a program is provided, the program being for causing a computer to implement controlling, on the basis of first data to be registered in a P2P database, association of the first data with second data that is to be registered in the P2P database and that is different from the first data.

### [Advantageous Effects of Invention]

According to the present disclosure as described above, a plurality of instances of data registered in a P2P database can be associated appropriately.

Note that the above-described effect is not intended to be limited, and any of the effects described in the present specification, or other effects that can be understood from the present specification, may also be provided along with or instead of the above-described effect.

### [Brief Description of Drawings]

[Fig. 1] Fig. 1 is a diagram illustrating an overview of blockchain data, which is one type of a peer-to-peer database.
[Fig. 2] Fig. 2 is a diagram illustrating an overview of blockchain data, which is one type of a peer-to-peer database.
[Fig. 3] Fig. 3 is a diagram illustrating an overview of blockchain data, which is one type of a peer-to-peer database.
[Fig. 4] Fig. 4 is a diagram illustrating an example of the system configuration of an information processing system.
[Fig. 5] Fig. 5 is a block diagram illustrating an example of the functional configuration of a node device 100.
[Fig. 6] Fig. 6 is a block diagram illustrating an example of the functional configurations of a data registration device 200 and a data usage device 300.
[Fig. 7] Fig. 7 is a flowchart illustrating a specific example of processing of registering second data in a P2P database 120.
[Fig. 8] Fig. 8 is a diagram illustrating a specific example of processing of registering the second data in the P2P database 120.
[Fig. 9] Fig. 9 is a diagram illustrating a specific example of processing of registering the second data in the P2P database 120.
[Fig. 10] Fig. 10 is a diagram illustrating a specific example of processing of registering the second data in the P2P database 120.
[Fig. 11] Fig. 11 is a flowchart illustrating a specific example of processing of obtaining data registered in the P2P database 120.
[Fig. 12] Fig. 12 is a flowchart illustrating a specific example of processing of changing privileges of data registered in the P2P database 120.
[Fig. 13] Fig. 13 is a diagram illustrating a specific example of processing of changing privileges of data registered in the P2P database 120.
[Fig. 14] Fig. 14 is a flowchart illustrating a specific example of processing of registering first data in the P2P database 120 and processing of associating the first data with the second data.
[Fig. 15] Fig. 15 is a diagram illustrating a specific example of processing of registering the first data in the P2P database 120 and processing of associating the first data with the second data.
[Fig. 16] Fig. 16 is a diagram illustrating a specific example of processing of registering the first data in the P2P database 120 and processing of associating the first data with the second data.
[Fig. 17] Fig. 17 is a diagram illustrating a specific example of processing of registering the first data in the P2P database 120 and processing of associating the first data with the second data.
[Fig. 18] Fig. 18 is a flowchart illustrating a specific example of processing of obtaining associated data.
[Fig. 19] Fig. 19 is a flowchart illustrating a specific example of processing of obtaining a state of association.
[Fig. 20] Fig. 20 is a block diagram illustrating an example of the hardware configuration of an information processing device 900 embodying the node device 100, the data registration device 200, or the data usage device 300.

### [Description of Embodiments]

Hereinafter, preferred embodiments of the present disclosure will be described in detail with reference to the accompanying drawings. Note that in the present specification and the drawings, constituent elements having substantially identical functional configurations will be given identical reference signs to avoid redundant descriptions.

The descriptions will be given in the following order.
1. Overview of Peer-To-Peer Database
2. Embodiment
2.1. Example of System Configuration
2.2. Example of Functional Configuration of Node Device 100
2.3. Examples of Functional Configurations of Data Registration Device 200 and Data Usage Device 300
2.4. Specific Examples of Processing
2.5.
2.6. Example of Hardware Configuration
3. Conclusion

### <1. Overview of Peer-To-Peer Database>

Before describing an embodiment of the present disclosure, an overview of a peer-to-peer database will be given.

In an information processing system according to the present disclosure, a distributed peer-to-peer database, which is provided over a peer-to-peer network, is used. The peer-to-peer network may also be called a peer-to-peer distributed filesystem. The peer-to-peer network may be referred to as a "P2P network", and the peer-to-peer database may be referred to as a "P2P database". Blockchain data distributed over a P2P network can be given as an example of a P2P database. As such, an overview of the blockchain system will be given first as an example.

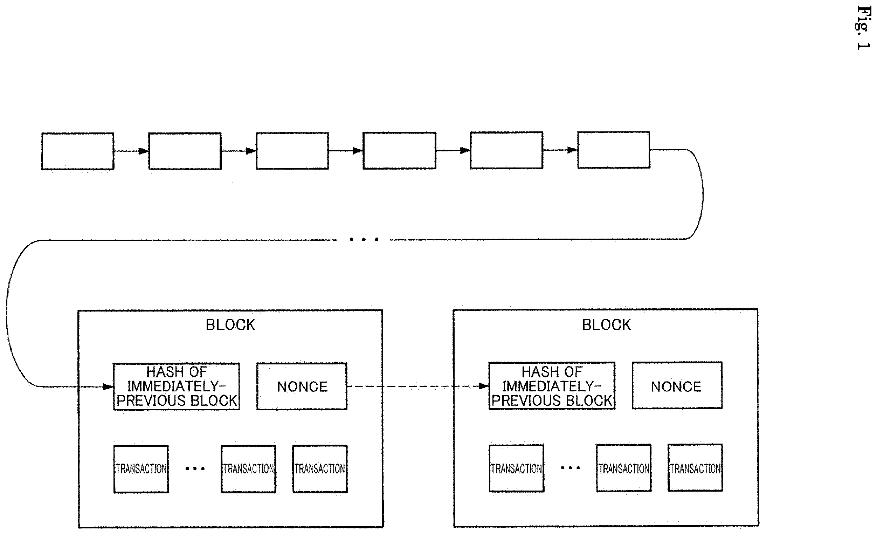

As illustrated in Fig. 1, the blockchain data is data containing multiple blocks which are linked together like a chain. Each block can contain one, or two or more, instances of target data as transaction data (a transaction).

Data used to exchange data for virtual currencies such as Bitcoin can be given as an example of blockchain data. The blockchain data used to exchange virtual currency data contains a hash of the block immediately previous and a value called a nonce. The hash of the block immediately previous is information used to determine if the block is the "correct block", which is connected correctly to the block immediately previous. The nonce is information used to prevent spoofing in authentication using the hash, and tampering is prevented by using the nonce. A character string, a numerical string, data that is a combination thereof, and so on can be given as examples of the nonce.

With blockchain data, spoofing is prevented by adding a digital signature, which uses a cryptographic key, to each instance of transaction data. Each instance of transaction data is made public and shared across the entire P2P network. Note that each instance of transaction data may be encrypted using the cryptographic key.

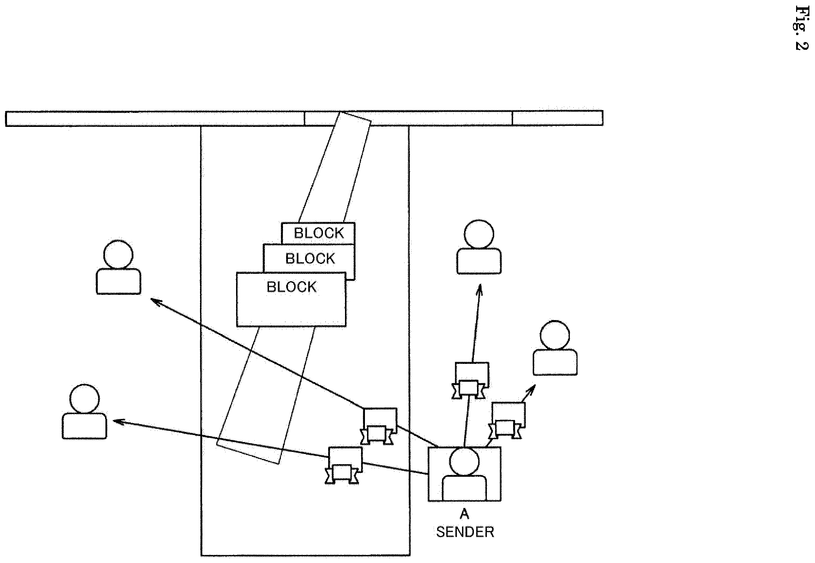

Fig. 2 is a diagram illustrating target data being registered by a user A in a blockchain system. The user A adds a digital signature, which has been generated using a private key of the user A, to the target data to be registered in the blockchain data. The user A then broadcasts the transaction data, which includes the target data to which the digital signature has been added, over the P2P network. This ensures that the owner of the target data is the user A.

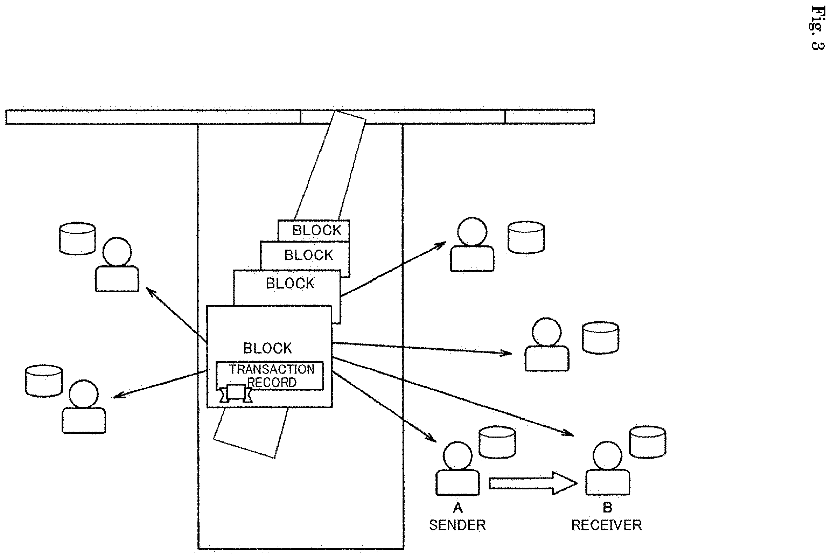

Fig. 3 is a diagram illustrating target data being transferred from the user A to a user B in a blockchain system. The user A adds the digital signature, generated using the private key of the user A, to the transaction data, and a public key of the user B is included in the transaction data. This indicates that the target data has been transferred from the user A to the user B. At the time of the transaction with the target data, the user B may obtain a public key of the user A from the user A, and obtain the target data to which the digital signature has been added or which has been encrypted.

In a blockchain system, it is also possible to use sidechain technology, for example, to include other target data, different from a virtual currency, in the blockchain data used to exchange existing virtual currency data such as Bitcoin blockchain data.

### <2. Embodiment>

The foregoing has been an overview of a P2P database. An embodiment according to the present disclosure will be described next.

### (2.1. Example of System Configuration)

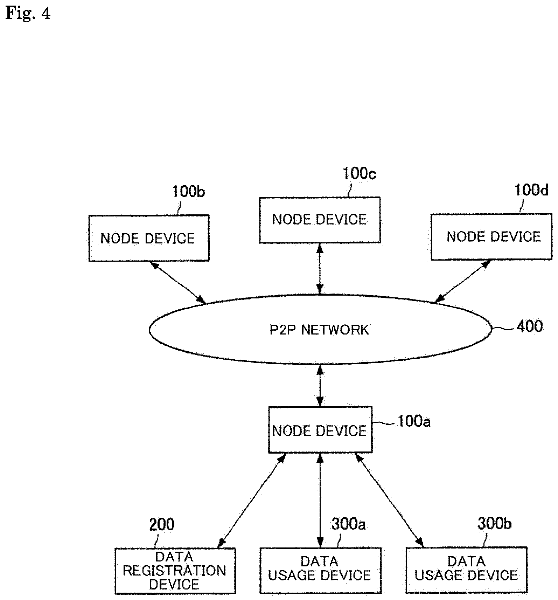

First, an example of the system configuration of an information processing system according to the present embodiment will be described with reference to Fig. 4. As illustrated in Fig. 4, the information processing system according to the present embodiment includes: node devices 100 (node device 100a to node device 100d, in the drawing); a data registration device 200; and data usage devices 300 (data usage device 300a and data usage device 300b, in the drawing).

Although the details of services which can be provided by the information processing system according to the present embodiment are not particularly limited, the following will describe a case where the information processing system provides a service of managing student learning achievement records (e.g., records pertaining to exam results, obtained credits, obtained qualifications, or the like), student activity records (e.g., records pertaining to club activities, student council activities, attendance, or the like), or student post-graduation activity records (e.g., records pertaining to employment placement). The following will give overviews of each device included in the information processing system according to the present embodiment.

### (Node Device 100)

The node device 100 is an information processing device which holds a P2P database, and registers data in the P2P database, obtains data from the P2P database, and the like. The node device 100 manages data such as student learning achievement records, student activity records, student post-graduation activity records, or the like by registering the data in the P2P database, and provides a registration service and an obtainment service for this data to various educational institutions (e.g., nursery schools, kindergartens, elementary schools, junior high schools, senior high schools, universities, graduate schools, cram schools, prep schools, certification schools, career support centers, and the like), students or guardians, or various types of businesses (e.g., companies employing students, financial institutions that provide loans to students, or the like).

To describe the registration of data in the P2P database by the node device 100 in detail, the node device 100 has a function of being able to automatically set privileges of the data which is to be registered in the P2P database. First, the node device 100 obtains the data to be registered in the P2P database from the data registration device 200 or the data usage device 300. The node device 100 then specifies a target pertaining to the obtained data by analyzing the data, and then sets the privileges of the data for the target.

Here, the "data to be registered in the P2P database" includes, as described above, data of student learning achievement records, student activity records, student post-graduation activity records, or the like, but is not necessarily limited thereto. For example, the "data to be registered in the P2P database" may be asset data whose ownership can be transferred to a different target (e.g., data such as assets, coins, points, or the like).

Additionally, the "target pertaining to the data" includes, for example, a target related to details in the data (e.g., when the data is a student's grade data, the student, the student's guardian, or the like), a target which provides the data (e.g., a university providing the grade data), a target to which the data is to be provided (e.g., a career support center, a company that employs the student, or the like to which the grade data is to be provided), or the like, but is not limited thereto. To be more specific, the "target pertaining to the data" may be any entity having some kind of relationship with the data. The "target pertaining to the data" includes individuals, organizations (e.g., educational institutions, businesses, groups, or the like), devices (e.g., servers, sensor devices, or the like), systems, and so on, but is not limited thereto. Note that in this specification, the "target pertaining to the data" may sometimes be referred to simply as a "target".

"Privilege of the data" includes, for example, a privilege for obtaining (viewing) the data, a privilege for adding to the privilege for the data (including changing the privilege through additions), a privilege for adding to the data (including the changing, invalidating, and so on of the data through additions), a privilege for receiving a predetermined notification when the data has been subjected to various types of processing, and so on, but is not limited thereto.

Thus far, in a P2P database, only a single owner (owner privileges) could be set for data to be registered. In this case, if there are actually multiple owners, the creator and the user of the data are different, or the like, it has been necessary to set multiple owners by splitting or copying the data itself, separately entering settings for privileges, or the like. On the other hand, the node device 100 according to the present embodiment can analyze the data to be registered in the P2P database and set privileges of the data for the target pertaining to the data. Thus even if there are actually multiple owners, the creator and the user of the data are different, or the like, privileges of the data can be set automatically for the multiple targets.

Additionally, if there is given data, as well as data generated on the basis of the given data, the node device 100 can control the association of those instances of data. To be more specific, on the basis of first data to be registered in the P2P database, the node device 100 can control the association of that first data with second data that is to be registered in the P2P database and that is different from the first data.

Here, "first data" is data generated on the basis of the second data (in other words, the "second data" is data on the basis of which the first data is generated). Note also that the data does not necessarily correspond to one of the "first data" and the "second data", and may correspond only to the "first data", correspond only to the "second data", or may correspond to both the "first data" and the "second data". For example, when data generated on the basis of the "second data" corresponds to the "first data" but that data serves as the basis of another instance of "first data", that data also corresponds to the "second data".

"Generated on the basis of the second data" refers not only to cases where the first data is generated by referring to the second data, the first data is generated so as to include some or all of the second data, and the like, but also to cases where some kind of event (or processing, or the like) is performed using the second data and the first data is generated as a result. For example, when the second data is data from when a student graduates from university (e.g., diploma data, grade data, or the like; called "graduation data" hereinafter), an event of job hunting is performed using that data, the student's employment placement is determined as a result of the event, and data of the employment placement (called "employment placement data" hereinafter) is generated as the first data, note that it can be said that "the employment placement data (the first data) has been generated on the basis of the graduation data (the second data)".

Additionally, the first data or the second data may or may not already be registered in the P2P database at the point in time when the first data and the second data are associated. The following will describe a case where when the first data and the second data are associated, the first data is not yet registered in the P2P database (in other words, the first data is registered in the P2P database around the same time, or immediately before or after, the association), and the second data is already registered in the P2P database.

The node device 100 can recognize relationships between data registered in the P2P database by associating the first data and the second data. For example, when the second data is a student's graduation data, the university that is the issuer of the graduation data can recognize a utilization state in which the graduation data is utilized in job hunting. Additionally, the node device 100 can implement various types of processing based on the association between the first data and the second data. For example, when registering employment placement data (the first data) in the P2P database, the node device 100 may provide some kind of reward to the university which is the issuer of the graduation data (the second data) utilized in the job hunting, raise an evaluation of the graduation data (the second data) itself, or the like. Note that the details of the various types of processing based on the association between the first data and the second data are not limited thereto. This will be described in greater detail later.

Furthermore, the node device 100 can set privileges of the first data on the basis of privileges of the original second data by associating the first data and the second data. To be more specific, the node devices 100 can set privileges of the first data for a target pertaining to the second data. Through this, for example, a university that is the issuer of graduation data (the second data) can obtain privileges allowing the university to view employment placement data (the first data) generated on the basis of the graduation data. The association between data and the privileges settings performed by the node device 100 will be described in detail later.

### (Data Registration Device 200)

The data registration device 200 is an information processing device that requests the node device 100 to register the second data in the P2P database. To describe in more detail, the data registration device 200 generates the second data which will be used later by the data usage device 300, and requests the node device 100 to register the second data in the P2P database.

Note that the entity which uses the data registration device 200 is assumed to be an educational institution, a student or a guardian, a business, or the like, but is not limited thereto. The present embodiment will describe a case where the entity which uses the data registration device 200 is a university as an example. For example, the university uses the data registration device 200 to request that graduation data or the like be registered in the P2P database.

### (Data Usage Device 300)

The data usage device 300 is an information processing device that uses the data registered in the P2P database. To describe in more detail, the data usage device 300 makes, to the node device 100, a request for obtaining (viewing) the first data or the second data registered in the P2P database, makes a request to change the privileges of the first data or the second data, makes a request to generate the first data on the basis of the second data and register the first data in the P2P database, makes a request to obtain a state of association between the first data and the second data, and the like.

Like the data registration device 200, the entity which uses the data usage device 300 is assumed to be an educational institution, a student or a guardian, a business, or the like, but is not limited thereto. The present embodiment will describe a case where two data usage devices 300 (the data usage device 300a and the data usage device 300b) are provided, with the data usage device 300a being used by a student and the data usage device 300b being used by a career support center, as an example. For example, the student uses the data usage device 300a to make a request to obtain graduation data, and the career support center uses the data usage device 300b to make a request to register employment placement data and the like (generated on the basis of the graduation data) in the P2P database.

### (P2P Network 400)

A P2P network 400 is a network over which the P2P database is distributed. As described above, by connecting to the P2P network 400, each node device 100 can update the P2P database while ensuring consistency with the P2P database held by another node device 100.

Note that the type of the P2P network 400 is not particularly limited. For example, the P2P network 400 may be one of the following types: a consortium type operated by multiple organizations; a private type operated by a single organization; or a public type with no particular limitation on participants.

Note also that the communication method, type of lines, and so on used in the P2P network 400 are not particularly limited. For example, the P2P network 400 may be implemented over a dedicated line network such as IP-VPN (Internet Protocol - Virtual Private Network). Additionally, the P2P network 400 may be realized over public line networks such as the Internet, telephone networks, satellite communication networks, or the like, various types of LANs (Local Area Networks) including Ethernet (registered trademark), WANs (Wide Area Networks), or the like. Furthermore, the P2P network 400 may be implemented over a wireless communication network such as Wi-Fi (registered trademark), Bluetooth (registered trademark), or the like.

The foregoing has described an example of the system configuration of the information processing system according to the present embodiment. Note that the system configuration described above with reference to Fig. 4 is merely an example, and the system configuration of the information processing system according to the present embodiment is not limited to this example. The system configuration of the information processing system according to the present embodiment can be varied flexibly according to specifications, operations, and the like.

### (2.2. Example of Functional Configuration of Node Device 100)

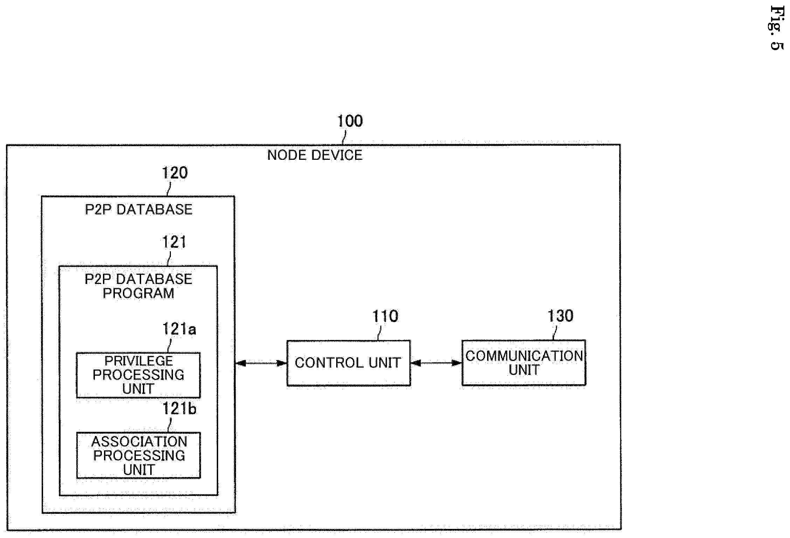

The foregoing has described an example of the system configuration of the information processing system according to the present embodiment. An example of the functional configuration of the node device 100 will be described next with reference to Fig. 5.

As illustrated in Fig. 5, the node device 100 includes a control unit 110, a P2P database 120, and a communication unit 130.

### (Control Unit 110)

The control unit 110 is a functional element that comprehensively controls the overall processing performed by the node device 100. For example, when various types of request signals have been provided from the data registration device 200, the data usage device 300, and the like, the control unit 110 can control processing such as registering data, obtaining data, setting privileges of data, associating data, obtaining a state of association, and the like in accordance with the request signals. Note that the details of the control performed by the control unit 110 are not limited thereto. For example, the control unit 110 may control processing which is typically performed by various types of servers, generic computers, PCs (Personal Computers), tablet PCs, and the like (e.g., processing pertaining to an OS (Operating System)).

### (P2P Database 120)

The P2P database 120 is a database held in common by each of the node devices 100, and is, for example, blockchain data. The authenticity of the first data and the second data is ensured by the data being registered in the P2P database 120. As described above, the first data and the second data are assumed to be student learning achievement records (e.g., records pertaining to exam results, obtained credits, obtained qualifications, or the like), student activity records (e.g., records pertaining to club activities, student council activities, attendance, or the like), student post-graduation activity records (e.g., records pertaining to employment placement), asset data (e.g., data such as assets, coins, points, or the like), or the like, but are not limited thereto. Additionally, the first data and the second data may be encrypted through a predetermined encryption method.

As illustrated in Fig. 5, the P2P database 120 includes a P2P database program 121.

### (P2P Database Program 121)

The P2P database program 121 is provided in the P2P database 120, and is a predetermined program which runs in the P2P database 120. By using the P2P database program 121, various types of processing, including transactions of virtual currencies such as Bitcoin, are implemented according to predetermined rules while maintaining consistency. With respect to the predetermined rules, for example, the P2P database program 121 may perform approval processing, billing processing, and the like based on the predetermined rules by cooperating with other node devices 100 when registering data or obtaining data. Additionally, providing the P2P database program 121 in the P2P database 120 reduces the risk of unauthorized modification of the program. The P2P database program 121 is Hyperledger chain code, but is not limited thereto. For example, the P2P database program 121 may refer to a smart contract.

The P2P database program 121 can implement the overall processing performed for the P2P database 120. For example, the P2P database program 121 registers data in the P2P database 120, obtains data from the P2P database 120, and the like. As illustrated in Fig. 5, the P2P database program 121 includes a privilege processing unit 121a and an association processing unit 121b, and can set privileges of data, associate data, obtain a state of association, and so on by controlling these functional elements. Note that the processing implemented by the P2P database program 121 is not limited thereto. Additionally, the development language of the P2P database program 121, the number of P2P database programs 121 provided in the P2P database 120, and the like are not particularly limited.

### (Privilege processing Unit 121a)

The privilege processing unit 121a is a functional element that, by analyzing the first data (or the second data), specifies a target pertaining to the first data (or the second data) and sets privileges of the first data (or the second data) for that target. To describe in more detail, by analyzing the first data (or the second data), the privilege processing unit 121a recognizes a predetermined character string included in the first data (or the second data), and specifies a target pertaining to the first data (or the second data) on the basis of the character string. For example, if the first data includes the character string "issuer":"schoo_abc", recognizing the predetermined character string of "issuer" results in the character string of "school_abc" following the predetermined character string being recognized as information indicating the issuer, and privileges of the first data are set for the issuer. Additionally, at this time, the privilege processing unit 121a can set the privileges of the first data on the basis of the privileges of the original second data. To be more specific, the privilege processing unit 121a can set the privileges of the first data for a target pertaining to the second data. A specific example will be given later.

To set the privileges, the privilege processing unit 121a sets privilege information indicating the privileges of the first data (or the second data), and manages the privilege information separate from the first data and the second data. For example, the privilege processing unit 121a registers the privilege information indicating the privileges of the first data (or the second data) in the P2P database 120 in table format, separate from the first data and the second data. By registering the privilege information in the P2P database 120, the privilege processing unit 121a can ensure the authenticity of the privilege information. Additionally, by having the privilege processing unit 121a manage the privilege information separate from the first data and the second data, the time required to obtain the privilege information can be shortened as compared to a case where, for example, the privilege information is stored in the first data or the second data (because it is no longer necessary to search the first data or the second data in which the privilege information is stored). Note that the foregoing is merely an example, and the privilege processing unit 121a does not necessarily have to register the privilege information in the P2P database 120, and does not necessarily have to manage the privilege information separate from the first data and the second data (in other words, the privilege processing unit 121a may store the privilege information in the first data or the second data).

In addition to the privileges setting processing, the privilege processing unit 121a also performs privileges confirmation processing. To be more specific, when a request signal requesting that various types of processing (e.g., obtaining data, changing privileges of data, adding to data, and so on) be performed on the data registered in the P2P database 120 (the first data or the second data) is provided from the data usage device 300, the privilege processing unit 121a confirms whether or not an operator of the data usage device 300 has privileges for that processing by obtaining the privilege information registered in the P2P database 120. The processing performed by the privilege processing unit 121a will be described in detail later.

### (Association Processing Unit 121b)

The association processing unit 121b is a functional element that, on the basis of the first data to be registered in the P2P database 120, controls the association of that first data with the second data that is to be registered in the P2P database 120 and that is different from the first data. To be more specific, the first data includes relation information indicating that the first data is related to the second data, and the association processing unit 121b associates the first data and the second data on the basis of the relation information. For example, the first data includes information of "data-from":"data1" as the relation information, and by recognizing a predetermined character string of "data_from", the association processing unit 121b recognizes that the character string "data1" after the predetermined character string is information indicating the second data, and associates the first data and the second data. Although it is assumed that the relation information is stored in the first data by the issuer (creator) of the first data through a predetermined method (e.g., manual input, processing by a predetermined program, or the like), the configuration is not necessarily limited thereto.

Note that the method of association by the association processing unit 121b is not necessarily limited to this method. For example, the association processing unit 121b may associate the first data and the second data when, by analyzing the first data, an analysis result indicating that the first data is related to the second data is obtained. For example, the association processing unit 121b may associate the first data and the second data on the basis of the first data containing all or some similar parts of the second data. Through this, when, for example, first data containing all or some similar parts of the second data is generated by copying all or some of the second data, changing some of the second data, or the like, the association processing unit 121b can automatically associate the first data and the second data even if the first data does not contain the relation information. Note that even if the first data does not contain all or some similar parts of the second data, the association processing unit 121b may associate the first data and the second data when it is presumed that the first data has some kind of relation with the second data.

The association processing unit 121b associates the first data and the second data using association information indicating an association between the first data and the second data, and manages the association information separate from the first data and the second data. For example, the association processing unit 121b registers the association information in the P2P database 120 in table format, separate from the first data and the second data. By registering the association information in the P2P database 120, the association processing unit 121b can ensure the authenticity of the association information. Additionally, by having the association processing unit 121b manage the association information separate from the first data and the second data, the time required to obtain the association information can be shortened as compared to a case where, for example, the association information is stored in the first data or the second data (because it is no longer necessary to search the first data or the second data in which the association information is stored). Note that the foregoing is merely an example, and the association processing unit 121b does not necessarily have to register the association information in the P2P database 120, and does not necessarily have to manage the association information separate from the first data and the second data (in other words, the association processing unit 121b may store the association information in the first data or the second data).

Connections between associated data may diverge partway along (in other words, when a plurality of instances of the first data are based on the second data), or may not diverge, or connections which have diverged may be merged into a single connection (in other words, when the first data has been generated on the basis of a plurality of instances of the second data). In other words, the number of instances of the second data associated with the first data is not limited, and the number of instances of the first data associated with the second data is not limited either.

The association processing unit 121b also performs processing of obtaining the state of association. To be more specific, the association processing unit 121b obtains a number of instances of data associated with data in a later stage and specified by an operator or the like of the data usage device 300, the entity that generated the data (the entity that performed the association), a date/time at which the data was generated (a date/time at which the association was performed), or the like. Note that the information obtained by the association processing unit 121b is not necessarily limited thereto.

Furthermore, the association processing unit 121b may perform various types of processing based on the association between the data. For example, when registering the first data in the P2P database 120, the association processing unit 121b may provide a reward to the issuer of the second data on which the first data is based, raise an evaluation of the second data itself, or the like. For example, when registering employment placement data (the first data) in the P2P database 120, the association processing unit 121b may provide a reward (e.g., Bitcoin coins or the like) to the university which is the issuer of the graduation data (the second data) utilized in the job hunting, raise an evaluation of the graduation data (the second data) itself, or the like.

Here, the reward or the like provided to the issuer of the second data may be determined in accordance with a level of contribution to the first data. For example, a plurality of instances of the second data associated with the first data in a previous stage may be determined to have a higher level of contribution in the connection between the data the closer the second data is to the first data, and may therefore receive a greater reward or the like. Note that the distribution of the rewards received by each of the plurality of instances of the second data associated with the first data in a previous stage can be changed flexibly in association with the details of the service, the details of the data, and the like. A range of the second data to which a reward or the like is given is not particularly limited. To be more specific, the association processing unit 121b may distribute the reward or the like within a range including all of the second data associated with the first data in the previous stage, or may distribute the reward or the like only to second data associated within a predetermined range from the first data. Additionally, a target pertaining to the first data may receive the reward or the like, rather than a target pertaining to the second data receiving the reward or the like. To be more specific, as a result of the first data being registered, a target pertaining to the second data can obtain the first data, view the first data, and so on. In this manner, when it is determined that a target pertaining to the second data has obtained some benefit from the first data, the association processing unit 121b may provide a reward or the like to the target pertaining to the first data. Additionally, the association processing unit 121b may apply some kind of penalty to a target pertaining to the first data or a target pertaining to the second data. For example, if an individual who generated the first data has registered the first data without using the relation information to indicate the second data referenced when generating the first data, the association processing unit 121b may detect that state on the basis of a viewing record or the like of the data, and may apply some kind of penalty to that individual (e.g., a fine, a downgrade, a revocation of privileges of the data, or the like). The processing performed by the association processing unit 121b will be described in detail later.

### (Communication Unit 130)

The communication unit 130 is a functional element that communicates with an external device. For example, the communication unit 130 receives request signals from the data registration device 200 or the data usage device 300, sends data obtained from the P2P database 120 to these devices (the data usage device 300 in particular), and the like. Additionally, when communicating with another node device 100, the communication unit 130 sends and receives data and the like used to update the P2P database 120 (e.g., data used for consensus and the like). Note that the information communicated by the communication unit 130 and the communication cases are not limited to those described here.

The foregoing has described an example of the functional configuration of the node device 100. Note that the functional configuration described above with reference to Fig. 5 is merely an example, and the functional configuration of the node device 100 is not limited to this example. For example, the node device 100 does not necessarily have to include all of the functional elements illustrated in Fig. 5. Additionally, the privilege processing unit 121a, the association processing unit 121b, and the like do not absolutely have to be implemented by the P2P database program 121. For example, all or some of the processing of the privilege processing unit 121a, the association processing unit 121b, and the like may be implemented by the control unit 110. Additionally, the functional configuration of the node device 100 can be flexibly changed in accordance with the specifications, operations, and the like.

### (2.3. Examples of Functional Configurations of Data Registration Device 200 and Data Usage Device 300)

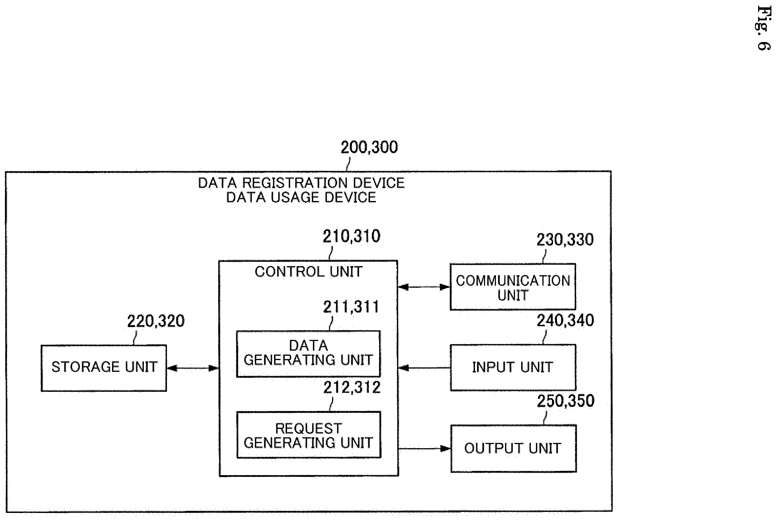

An example of the functional configuration of the node device 100 has been described above. Examples of the functional configurations of the data registration device 200 and the data usage device 300 will be described next with reference to Fig. 6. The data registration device 200 and the data usage device 300 can basically have the same functional configurations, and thus the following will primarily describe an example of the functional configuration of the data registration device 200; only differences from the data registration device 200 will be described with respect to the example of the functional configuration of the data usage device 300. It should be noted that the data registration device 200 and the data usage device 300 do not absolutely have to have the same functional configuration.

As illustrated in Fig. 6, the data registration device 200 includes a control unit 210, a storage unit 220, a communication unit 230, an input unit 240, and an output unit 250.

### (Control Unit 210)

The control unit 210 is a functional element that comprehensively controls the overall processing performed by the data registration device 200. For example, the control unit 210 can control processing such as generation of the second data, a registration request of the second data, and so on. Note that the details of the control performed by the control unit 210 are not limited thereto. For example, the control unit 210 may control processing which is typically performed by various types of servers, generic computers, PCs, tablet PCs, and the like (e.g., processing pertaining to an OS).

Additionally, a control unit 310 of the data usage device 300 can control processing such as generation of the first data, a registration request of the first data, an obtainment request of the first data or the second data, a privileges setting request of the first data or the second data, and obtainment request of the state of association, and so on.

### (Data Generating Unit 211)

A data generating unit 211 is a functional element that generates the second data. For example, when an operator of the data registration device 200 has made an input using the input unit 240, the data generating unit 211 generates the second data on the basis of that input. Note that the method of generating the second data is not limited thereto, and the data generating unit 211 may execute various types of programs and obtain the second data as a result of the processing of those programs.

A data generating unit 311 of the data usage device 300 is a functional element that generates the first data. The method of generating the first data can be the same as the method of generating the second data.

### (Request Generating Unit 212)

A request generating unit 212 is a functional element that requests various types of processing from the node device 100. For example, the request generating unit 212 implements the registration of the second data in the P2P database 120 by generating a request signal requesting that the second data be registered in the P2P database 120 and providing that signal to the node device 100 via the communication unit 230.

A request generating unit 312 of the data usage device 300 implements processing such as registering the first data in the P2P database 120, obtaining the first data or the second data from the P2P database 120, setting privileges of the first data or the second data, obtaining the state of association, and the like by generating request signals requesting those instances of processing and providing the signals to the node device 100 via a communication unit 330.

### (Storage Unit 220)

The storage unit 220 is a functional element that stores various types of information. For example, the storage unit 220 stores data generated by the data generating unit 211, request signals generated by the request generating unit 212, data obtained from the P2P database 120, and so on, stores programs, parameters, and the like used by the various functional elements of the data registration device 200, and so on. Note that the information stored by the storage unit 220 is not limited thereto.

### (Communication Unit 230)

The communication unit 230 is a functional element that communicates with an external device. For example, the communication unit 230 sends request signals and the like generated by the request generating unit 212 to the node device 100, receives data and the like obtained from the P2P database 120 from the node device 100, and so on. Note that the information communicated by the communication unit 230 and the communication cases are not limited to those described here.

### (Input Unit 240)

The input unit 240 is a functional element that accepts inputs from an operator. For example, the input unit 240 includes input devices such as a mouse, a keyboard, a touch panel, a button, a switch, a microphone, or the like, and by using these input devices, the operator can perform input operations for generating the second data, making a registration request of the second data, and so on. Note that the input devices included in the input unit 240 are not limited thereto.

### (Output Unit 250)

The output unit 250 is a functional element that performs various types of outputs by being controlled by the control unit 210. For example, the output unit 250 includes a display device such as a display, an audio output device such as a speaker, a tactile presentation device such as an actuator, and the like, and outputs data generated by the data generating unit 211, data obtained from the P2P database 120, or the like on the basis of control by the control unit 210. Note that the output devices included in the output unit 250 are not limited thereto.

The foregoing has described examples of the functional configurations of the data registration device 200 and the data usage device 300. Note that the functional configurations described above with reference to Fig. 6 are merely examples, and the functional configurations of the data registration device 200 and the data usage device 300 are not limited to these examples. For example, the data registration device 200 and the data usage device 300 do not necessarily have to include all of the functional elements illustrated in Fig. 6. Additionally, the functional configurations of the data registration device 200 and the data usage device 300 can be flexibly changed in accordance with the specifications, operations, and the like.

### (2.4. Specific Examples of Processing)

Examples of the functional configurations of the data registration device 200 and the data usage device 300 have been described above. Specific examples of the processing performed by the respective devices will be described next.

### (Second Data Registration Processing)

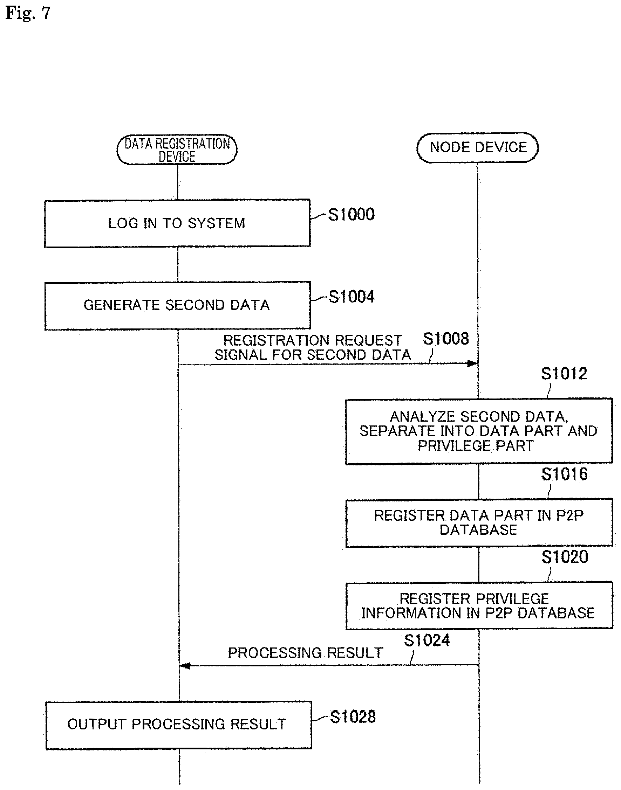

A specific example of registration processing of the second data will be described first with reference to Fig. 7. Fig. 7 is a flowchart illustrating a specific example of processing through which the data registration device 200 generates the second data and the node device 100 registers the second data in the P2P database 120.

In step S1000, an operator of the data registration device 200 logs in to the information processing system according to the present embodiment by making a predetermined input using the input unit 240. For example, the operator inputs identification information (e.g., an ID or the like) and a password of the operator, inputs biological information for the purpose of biometric authentication, or the like, and logs in to the information processing system according to the present embodiment on the basis of whether that information matches identification information and a password, or biological information, which have been registered in advance. Note that this process may be omitted as appropriate.

In step S1004, the data generating unit 211 generates the second data. For example, the data generating unit 211 generates the second data on the basis of an input made by the operator using the input unit 240. In step S1008, the request generating unit 212 generates a request signal requesting that the second data be registered in the P2P database 120, and the communication unit 230 sends that request signal to the node device 100.

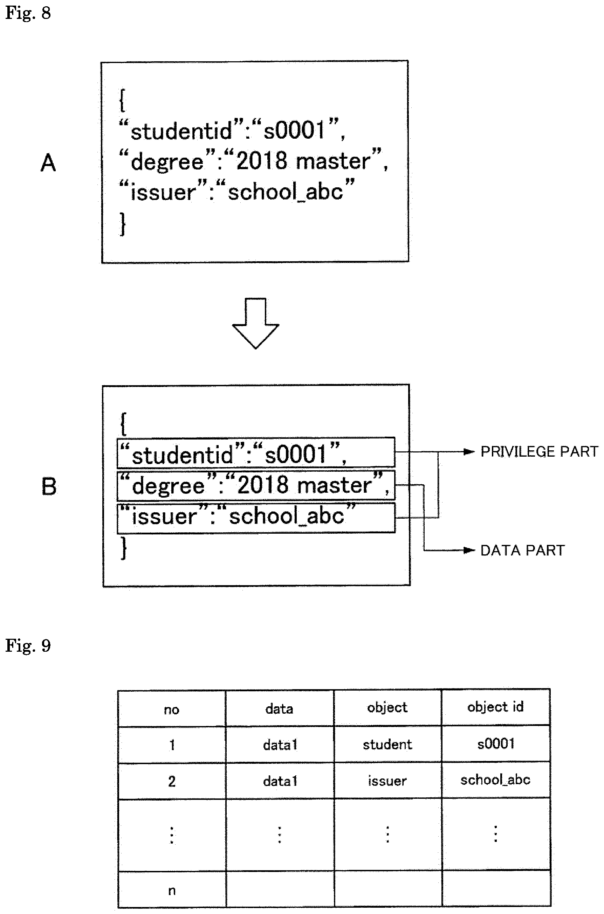

In step S1012, the privilege processing unit 121a of the node device 100 separates the second data into a data part and a privileges part by analyzing the second data. For example, if the second data is graduation data indicating a degree, as indicated in A of Fig. 8, the privilege processing unit 121a recognizes the privileges part and the data part by recognizing predetermined character strings of "studentid" and "issuer" as indicated in B of Fig. 8, and separates the privileges part and the data part. Note that the privilege processing unit 121a does not necessarily have to separate the privileges part and the data part, and instead may simply recognize these parts.

In step S1016, the P2P database program 121 registers the data part in the P2P database 120. Note that the P2P database program 121 does not necessarily have to register only the data part in the P2P database 120, and may register both the data part and the privileges part (in other words, the entirety of the second data) in the P2P database 120.

In step S1020, the privilege processing unit 121a registers the privilege information in the P2P database 120. For example, the privilege processing unit 121a registers the privilege information indicating the privileges of the second data in the P2P database 120 in table format, separate from the second data (the data part).

Here, a specific example of the privilege information registered on the basis of the second data in Fig. 8 is illustrated in Fig. 9. As illustrated in Fig. 9, the privilege information can be registered in the P2P database 120 as a table including "no", "data", "object", and "object id", "no" is information capable of identifying each of records included in the privilege information. "data" is information capable of identifying the data for each record included in the privilege information (in this example, "data1", which is capable of identifying the second data which is to be registered, is registered). "object" is information indicating a type of the target for which the privileges are to be set (in this example, "student", indicating a student that is a target of the graduation data, and "issuer", indicating the issuer of the graduation data, are registered). "object id" is information capable of identifying the target for which the privileges are to be set (in this example, "s0001", which can identify the student that is a target of the graduation data, and "school_abc", which can identify the issuer of the graduation data, are registered). Note that a plurality of data may be registered in each column. For example, a plurality of data may be registered for "object id".

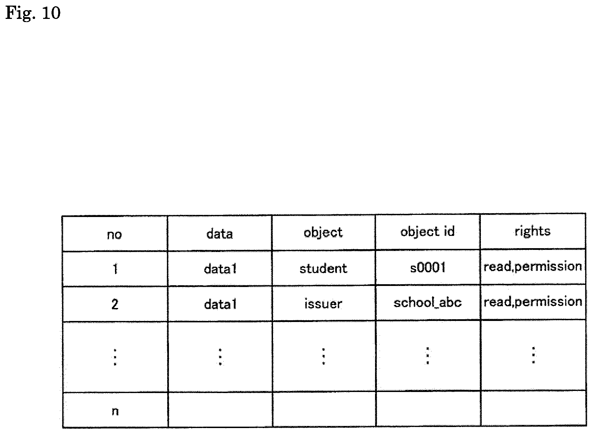

The present embodiment assumes that the details of the privileges set for each type of target for which privileges are to be set (or for each target for which privileges are to be set) are determined in advance. For example, if the type of the target for which privileges are to be set is "student", "issuer", or the like, it is assumed that the details of the privileges, e.g., that that type has privileges for obtaining (viewing) the data, privileges for changing the privileges of the data, and the like, are determined in advance. Rather than being limited to this, for example, the details of the privileges may be included in the data to be registered by the operator setting the details of the privileges for each instance of data. In this case, as illustrated in Fig. 10, the privilege information may include "rights", which indicates the details of the privileges (in the example in Fig. 10, privileges "read" for obtaining (viewing) the data and privileges "permission" for changing the privileges of the data are set for both "student" and "issuer"). Note that the details of the privilege information are not limited to the examples illustrated in Fig. 9 and Fig. 10. Additionally, the privilege information need not be registered in table format.

In step S1024 of Fig. 7, the communication unit 130 of the node device 100 sends a processing result to the data registration device 200. In step S1028, the series of processing for registering the second data ends by the output unit 250 of the data registration device 200 outputting the processing result provided from the node device 100.

Through the processing illustrated in Fig. 7, for example, a university that is the entity using the data registration device 200 can register the graduation data, which is the second data, in the P2P database 120.

### (Data Obtainment Processing)

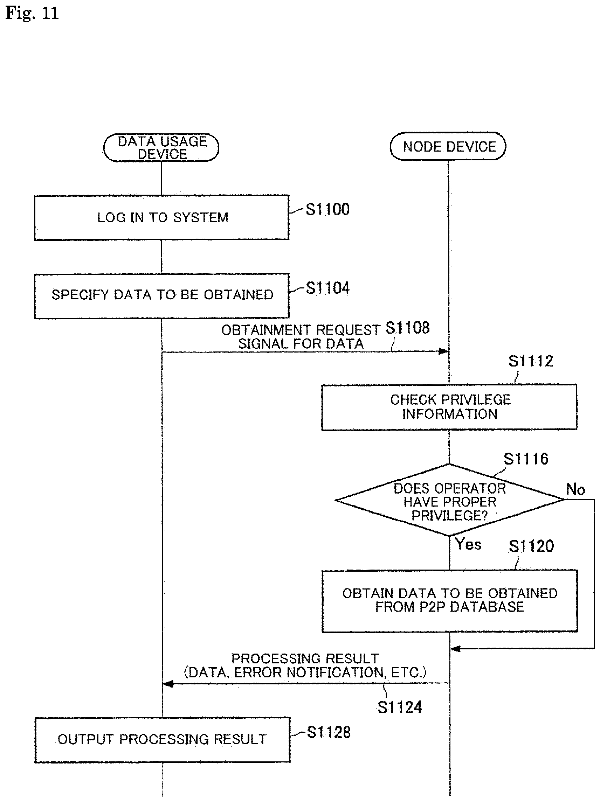

A specific example of processing for obtaining (viewing) the data registered in the P2P database 120 (the first data or the second data) will be described next with reference to Fig. 11. Fig. 11 is a flowchart illustrating a specific example of processing of obtaining data registered in the P2P database 120.

In step S1100, an operator of the data usage device 300 logs in to the information processing system according to the present embodiment by making a predetermined input using an input unit 340. In step S1104, the operator, for example, specifies the data to be obtained by using the input unit 340. Note that the method for specifying the data to be obtained is not limited thereto. In step S1108, the request generating unit 312 generates a request signal requesting that the specified data be obtained, and the communication unit 330 sends that request signal to the node device 100.

In step S1112, the privilege processing unit 121a of the node device 100 confirms the privilege information, and confirms whether or not the operator of the data usage device 300 has the proper privileges. When the operator has the proper privileges (step S1116/Yes), in step S1120, the P2P database program 121 obtains the data to be obtained from the P2P database 120. When the operator does not have the proper privileges (step S1116/No), the data to be obtained is not obtained.

In step S1124, the communication unit 130 sends, to the data usage device 300, a processing result (including the data, when the data has been successfully obtained, and including a predetermined error notification, when the obtainment of the data has failed). In step S1128, the series of processing for obtaining the data ends by an output unit 350 of the data usage device 300 outputting the processing result provided from the node device 100.

Through the processing illustrated in Fig. 11, for example, a student that is the entity using the data usage device 300a can obtain the graduation data, which is the second data, from the P2P database 120 and view the data.

### (Processing of Changing Privileges of Data)

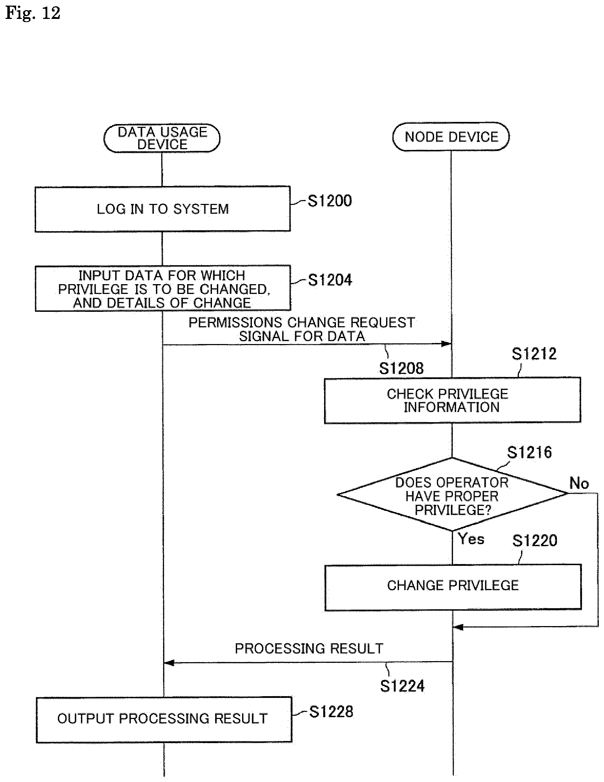

A specific example of processing of changing the privileges of the data registered in the P2P database 120 (the first data or the second data) will be described next with reference to Fig. 12. Fig. 12 is a flowchart illustrating a specific example of the processing of changing the privileges of data registered in the P2P database 120.

In step S1200, an operator of the data usage device 300 logs in to the information processing system according to the present embodiment by making a predetermined input using the input unit 340. In step S1204, the operator, for example, uses the input unit 340 to input the data for which the privileges are to be changed, and the details of the change in the privileges. In step S1208, the request generating unit 312 generates a request signal requesting that the privileges of the specified data be changed, and the communication unit 330 sends that request signal to the node device 100.

In step S1212, the privilege processing unit 121a of the node device 100 confirms the privilege information, and confirms whether or not the operator of the data usage device 300 has the proper privileges. When the operator has the proper privileges (step S1216/Yes), in step S1220, the privilege processing unit 121a changes the privileges by adding to the privilege information of that data. When the operator does not have the proper privileges (step S1216/No), the privileges are not changed.

In step S1224, the communication unit 130 sends the processing result to the data usage device 300. In step S1228, the series of processing of changing the privileges ends by the output unit 350 of the data usage device 300 outputting the processing result provided from the node device 100.

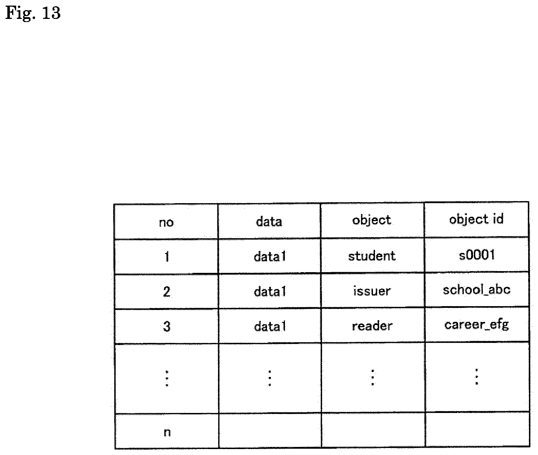

Through the processing illustrated in Fig. 12, for example, a student that is the entity using the data usage device 300a can change the privileges of the graduation data, which is the second data. For example, the student can add privileges of the graduation data for a career support center (object id: career_efg), as illustrated in Fig. 13.

### (Registration Processing of First Data and Association Processing)

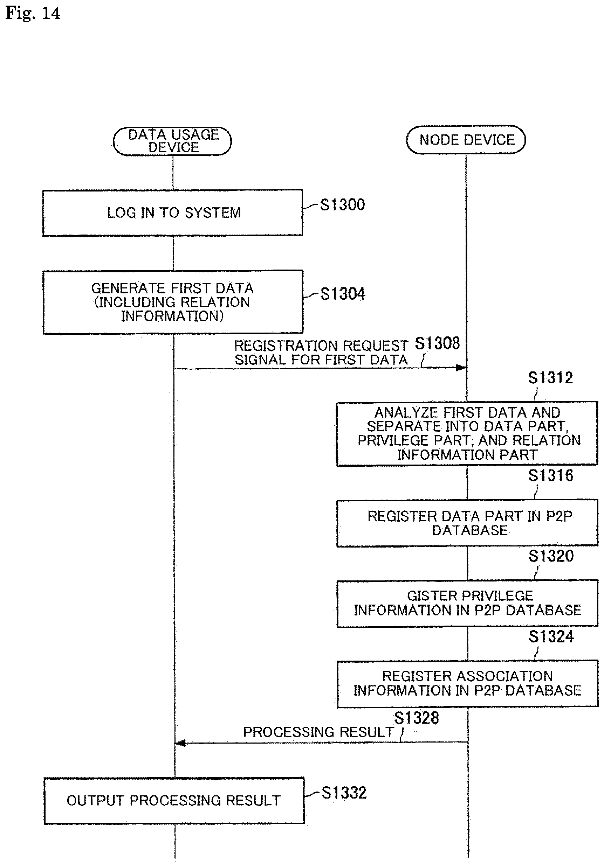

A specific example of processing of registering the first data and processing of associating the first data and the second data will be described next with reference to Fig. 14. Fig. 14 is a flowchart illustrating a specific example of processing through which the data usage device 300 generates the first data, the node device 100 registers the first data in the P2P database 120, and the first data and the second data are associated.

In step S1300, an operator of the data usage device 300 logs in to the information processing system according to the present embodiment by making a predetermined input using the input unit 340. In step S1304, the data generating unit 311 generates the first data including the relation information. For example, the data generating unit 311 generates the first data on the basis of an input made by the operator using the input unit 340. In step S1308, the request generating unit 312 generates a request signal requesting that the first data be registered in the P2P database 120, and the communication unit 330 sends that request signal to the node device 100.

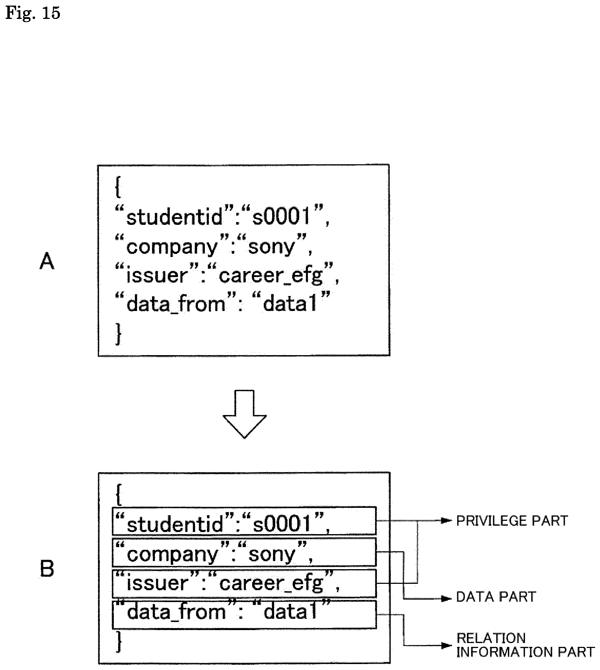

In step S1312, the privilege processing unit 121a of the node device 100 separates the first data into the data part, the privileges part, and a relation information part by analyzing the first data. For example, if the first data is employment placement data, as indicated in A of Fig. 15, the privilege processing unit 121a recognizes the privileges part from predetermined character strings of "studentid" and "issuer", recognizes the relation information part from a predetermined character string of "data_from", recognizes the other part as the data part, and separates those parts, as indicated in B of Fig. 15. Note that the privilege processing unit 121a does not necessarily have to separate these parts, and instead may simply recognize these parts.

In step S1316, the P2P database program 121 registers the data part in the P2P database 120. Note that the P2P database program 121 does not necessarily have to register only the data part in the P2P database 120, and may register the data part, the privileges part, and the relation information part (in other words, the entirety of the first data) in the P2P database 120.

In step S1320, the privilege processing unit 121a registers the privilege information in the P2P database 120. For example, the privilege processing unit 121a registers the privilege information indicating the privileges of the first data in the P2P database 120 in table format, separate from the first data and the second data. At this time, the privilege processing unit 121a sets the privileges of the first data on the basis of the privileges of the second data on which the first data is based. To be more specific, the privilege processing unit 121a can set the privileges of the first data for a target pertaining to the second data.

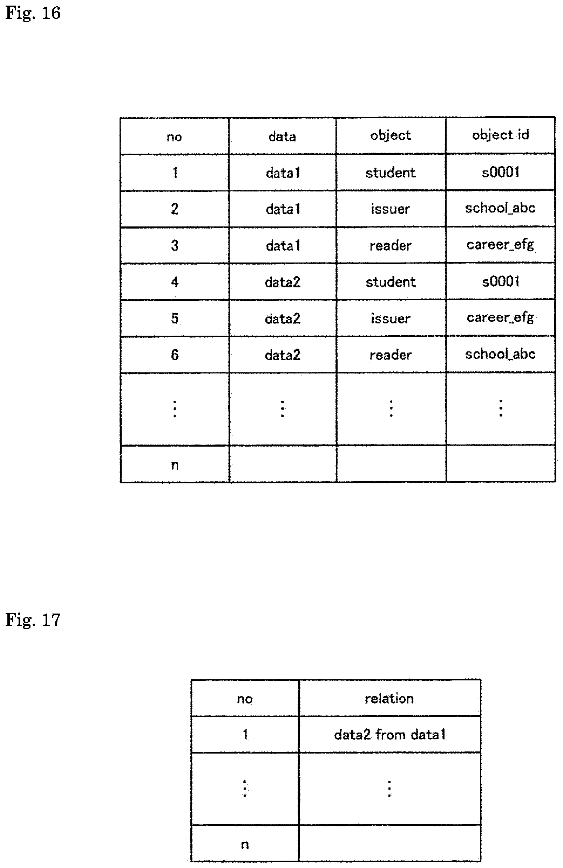

Here, Fig. 16 illustrates a specific example of the privilege information registered on the basis of the first data illustrated in Fig. 15 (records corresponding to no. 4 to no. 6 are the privilege information registered on the basis of the first data). As illustrated in Fig. 16, the privilege processing unit 121a can set the privileges of the first data not only for a target pertaining to the first data (a student (object id: s0001) and a career support center (object id: career_efg) included in the privileges part of the first data), but also for a target pertaining to the second data on which the first data is based (a university (object id: school_abc)). Through this, a target pertaining to the second data can perform various types of processing pertaining to the first data generated on the basis of the second data (and on other first data associated with a stage later than the stated first data). Note that when setting privileges of first data which is newly registered, the range of the second data to which the privileges refer is not necessarily limited. To be more specific, when setting privileges of first data which is newly registered, the privilege processing unit 121a may refer to the privileges of all the second data associated with the previous stage of that first data, or may refer only to the second data associated within a predetermined range from the first data. Through this, the privilege processing unit 121a can appropriately control a range of targets to be given privileges for the first data.

In step S1324, the association processing unit 121b registers the association information in the P2P database 120. For example, on the basis of the relation information part of "data_from":"data1", indicated in B of Fig. 15, the association processing unit 121b recognizes that the character string "data1", which follows the character string "data_from", is information indicating the second data, and registers the association information in the P2P database 120.

Here, Fig. 17 illustrates a specific example of the association information registered on the basis of the first data illustrated in Fig. 15. As illustrated in Fig. 17, the association information can be registered in the P2P database 120 as a table including "no" and "relation". "no" is information capable of identifying each of records included in the association information. "relation" is information indicating the first data and the second data which are associated. The example in Fig. 17 indicates "data2 from data1", and this indicates that "data2" is the first data and "data1" is the second data (in other words, "data2" has been generated on the basis of "data1"). Note that the details of the association information are not limited to the example illustrated in Fig. 17. Additionally, the association information need not be registered in table format.

In step S1328, the communication unit 130 sends the processing result to the data usage device 300. In step S1332, the processing of registering the first data and the association processing end by the output unit 350 of the data usage device 300 outputting the processing result provided from the node device 100.

Through the processing illustrated in Fig. 14, for example, a career support center that is the entity using the data usage device 300b can register employment placement data (the first data) generated on the basis of graduation data (the second data) in the P2P database 120, and can associate the graduation data and the employment placement data. Note that when the association has been performed, the node device 100 may make a predetermined notification to the target (e.g., a university, an individual, or the like) pertaining to the associated graduation data (the second data).

### (Processing of Obtaining Associated Data)

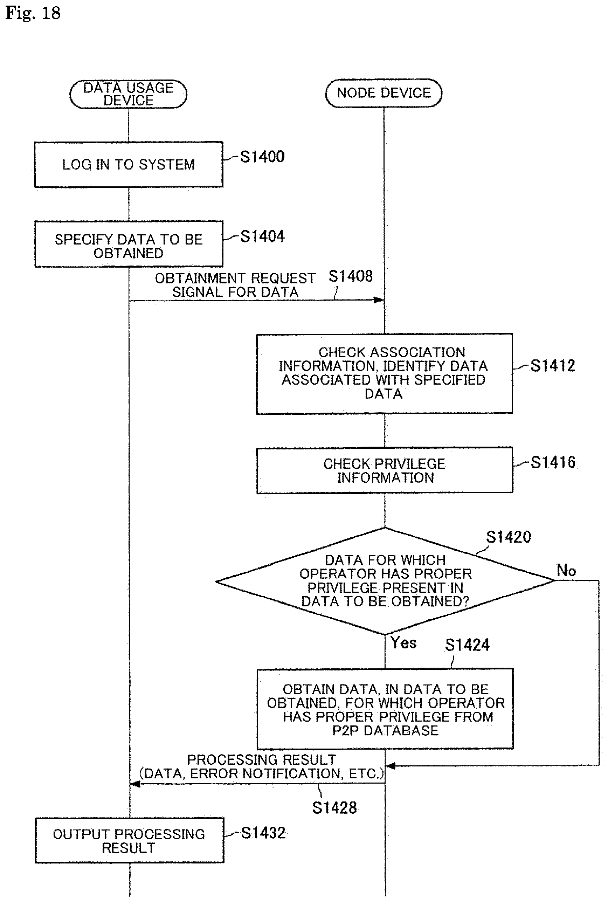

A specific example of processing of obtaining (viewing) associated data registered in the P2P database 120 will be described next with reference to Fig. 18. The node device 100 may, for example, provide a function of obtaining a plurality of instances of data, associated by the association information, at one time. Fig. 18 is a flowchart illustrating a specific example of processing of obtaining associated data registered in the P2P database 120.

In step S1400, an operator of the data usage device 300 logs in to the information processing system according to the present embodiment by making a predetermined input using the input unit 340. In step S1404, the operator, for example, specifies the data to be obtained by using the input unit 340. In step S1408, the request generating unit 312 generates a request signal requesting that the specified data be obtained, and the communication unit 330 sends that request signal to the node device 100.

In step S1412, the association processing unit 121b of the node device 100 recognizes the association information, and identifies data associated with the data specified by the operator. In step S1416, the privilege processing unit 121a recognizes the privilege information, and confirms whether or not there is data, in the data to be obtained, for which the operator of the data usage device 300 has the proper privileges. If there is data for which the operator of the data usage device 300 has the proper privileges (step S1420/Yes), in step S1424, the P2P database program 121 obtains the data, in the data to be obtained, for which the operator of the data usage device 300 has the proper privileges, from the P2P database 120. If there is no data for which the operator of the data usage device 300 has the proper privileges (step S1420/No), no data is obtained.

In step S1428, the communication unit 130 sends, to the data usage device 300, a processing result (including the data, when the data has been successfully obtained, and including a predetermined error notification, when the obtainment of the data has failed). In step S1432, the series of processing for obtaining the data ends by an output unit 350 of the data usage device 300 outputting the processing result provided from the node device 100.

Through the processing illustrated in Fig. 18, the operator of the data usage device 300 can obtain a plurality of instances of associated data without performing operations for obtaining each instance of the data.

### (Processing of Obtaining State of Association)

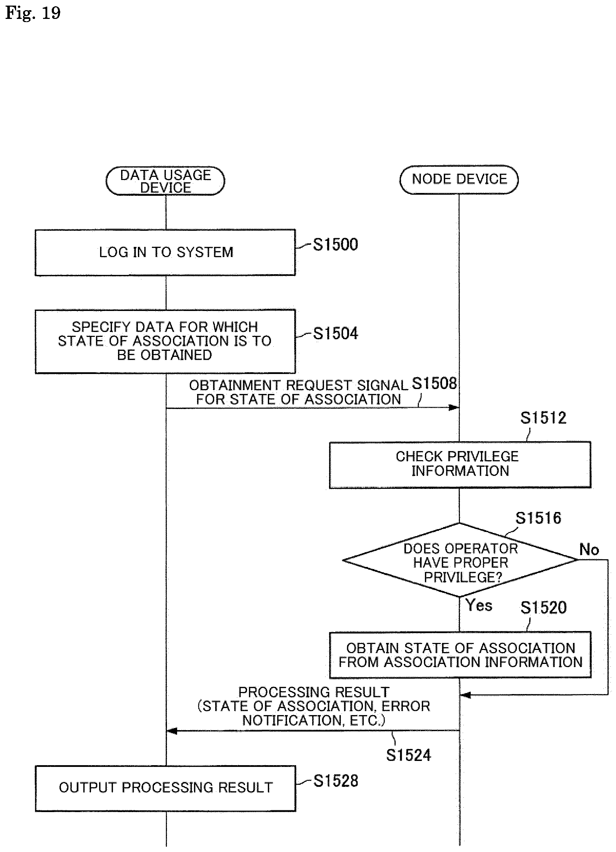

A specific example of processing of obtaining (viewing) a state of association between data registered in the P2P database 120 will be described next with reference to Fig. 19. Fig. 19 is a flowchart illustrating a specific example of processing of obtaining a state of association between data registered in the P2P database 120.

In step S1500, an operator of the data usage device 300 logs in to the information processing system according to the present embodiment by making a predetermined input using the input unit 340. In step S1504, the operator, for example, specifies the data for which the state of association is to be obtained by using the input unit 340. In step S1508, the request generating unit 312 generates a request signal requesting that the state of association of the specified data be obtained, and the communication unit 330 sends that request signal to the node device 100.

In step S1512, the privilege processing unit 121a of the node device 100 confirms the privilege information, and confirms whether or not the operator of the data usage device 300 has the proper privileges. When the operator has the proper privileges (step S1516/Yes), in step S1520, the association processing unit 121b obtains the state of association with the specified data from the association information. To be more specific, the association processing unit 121b obtains, from the association information, a number of instances of data associated with a later stage of the specified data, the entity that generated the data (the entity that performed the association), a date/time at which the data was generated (a date/time at which the association was performed), or the like. Note that the obtained details of the state of association are not limited thereto. When the operator does not have the proper privileges (step S1516/No), the state of association is not obtained.

In step S1524, the communication unit 130 sends, to the data usage device 300, a processing result (including the state of association, when the state of association has been successfully obtained, and including a predetermined error notification, when the obtainment of the state of association has failed). In step S1528, the series of processing for obtaining the data ends by an output unit 350 of the data usage device 300 outputting the processing result provided from the node device 100.

Through the processing illustrated in Fig. 19, the operator of the data usage device 300 can recognize the state of association with desired data, and can, for example, recognize a utilization state, degree of influence, and so on of the desired data.

### (2.5. Other Use Cases)

The foregoing has primarily described a use case in which the present disclosure is applied in a service for managing student learning achievement records and the like. Other use cases for the present disclosure will be described next.

For example, the present disclosure may be applied in a license management service for program source code. To be more specific, the node device 100 can associate source code (the second data) already registered in the P2P database 120 with new source code (the first data) generated on the basis of the stated source code. Then, the node device 100 can set privileges of the new source code (the first data) on the basis of privileges of the source code (the second data) already registered in the P2P database 120. Through this, when a license (usage privileges) is set for source code (the second data) already registered in the P2P database 120, when the source code (the second data) is widely publicized to third parties, and so on, the node device 100 can pass the license to new source code (the first data), widely publicize the new source code (the first data) to third parties, and so on. Additionally, the node device 100 can provide rewards and so on on the basis of associations between source code. For example, on the basis of a number of views, evaluations, licensing revenue, or the like of new source code (the first data), the node device 100 can provide some kind of reward (e.g., an evaluation, a share of the licensing revenue, or the like) to an author of source code (the second data) associated with a previous stage of the stated source code (the first data).

Additionally, the present disclosure may be applied in a music copyright management service. To be more specific, the node device 100 can associate music data (the second data) already registered in the P2P database 120 with new music data (the first data) generated by arranging or remixing the stated music data. Then, in the same manner as the source code license management service, the node device 100 can set privileges of the new music data (the first data) on the basis of privileges of the music data (the second data) already registered in the P2P database 120. Additionally, the node device 100 can provide rewards and so on on the basis of associations between music data. For example, on the basis of a number of playbacks, evaluations, copyright revenue, or the like of new music data (the first data), the node device 100 can provide some kind of reward (e.g., an evaluation, a share of the copyright revenue, or the like) to an author of music data (the second data) associated with a previous stage of the stated music data (the first data).

Additionally, the present disclosure may be applied in a service for managing copyright in a community site. For example, the node device 100 can associate recipe data of a dish (the second data) already registered in the P2P database 120 of a community site with new recipe data (the first data) generated by modifying the stated recipe data. Then, in the same manner as the source code license management service and the like, the node device 100 can set privileges of the new recipe data (the first data) on the basis of privileges of the recipe data (the second data) already registered in the P2P database 120. Additionally, the node device 100 can provide rewards and so on on the basis of associations between recipe data. For example, on the basis of a number of views, evaluations, advertising revenue, or the like of new recipe data (the first data), the node device 100 can provide some kind of reward (e.g., an evaluation, a share of the advertising revenue, or the like) to an author of recipe data (the second data) associated with a previous stage of the stated recipe data (the first data).

### (2.6. Example of Hardware Configuration)

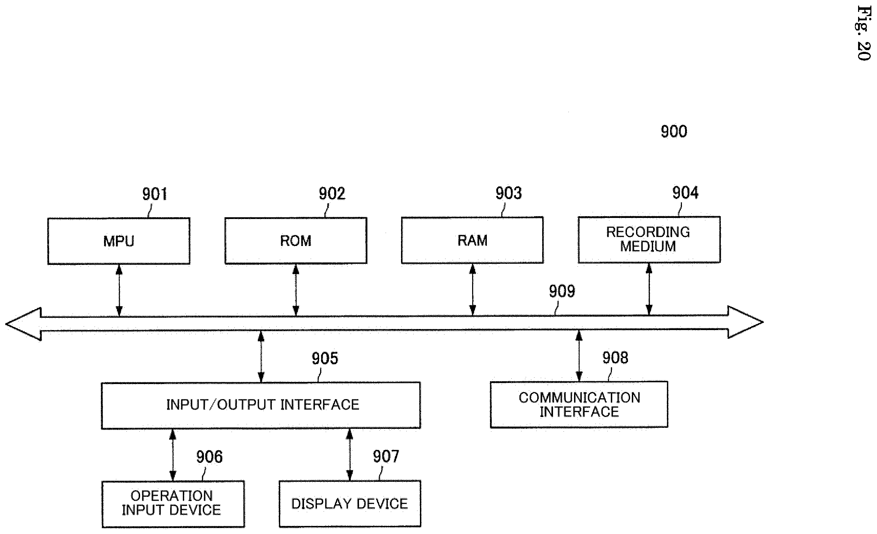

The foregoing has described other use cases according to the present disclosure. An example of the hardware configuration of the node device 100, the data registration device 200, or the data usage device 300 will be described next with reference to Fig. 20.

Fig. 20 is a block diagram illustrating an example of the hardware configuration of an information processing device 900 embodying the node device 100, the data registration device 200, or the data usage device 300.

The information processing device 900 includes, for example, an MPU 901, ROM 902, RAM 903, a recording medium 904, an input/output interface 905, an operation input device 906, a display device 907, and a communication interface 908. The constituent elements of the information processing device 900 are connected to each other by a bus 909 serving as a data transmission path.

The MPU 901 is constituted by, for example, one, or two or more, processors constituted by a computation circuit such as an MPU, and functions as the control unit 110 of the node device 100, the control unit 210 of the data registration device 200, or the control unit 310 of the data usage device 300. Note that the control unit 110 of the node device 100, the control unit 210 of the data registration device 200, or the control unit 310 of the data usage device 300 may be constituted by a dedicated (or generic) circuit (e.g., a processor separate from the MPU 901) that is capable of implementing the various types of processing described above.

The ROM 902 stores programs used by the MPU 901, control data such as computation parameters, and the like. The RAM 903 temporarily stores programs and the like executed by the MPU 901, for example.

The recording medium 904 functions as the P2P database 120 of the node device 100, the storage unit 220 of the data registration device 200, or a storage unit 320 of the data usage device 300, and stores various types of data, such as data and various types of programs pertaining to information processing according to the present embodiment. Here, a magnetic recording medium such as a hard disk, non-volatile memory such as flash memory, and the like can be given as examples of the recording medium 904. The recording medium 904 may be removable from the information processing device 900.

The input/output interface 905 connects the operation input device 906, the display device 907, and the like, for example. Here, a USB (Universal Serial Bus) terminal, a DVI (Digital Visual Interface) terminal, an HDMI (High-Definition Multimedia Interface) (registered trademark) terminal, various types of processing circuits, and the like can be given as examples of the input/output interface 905.

The operation input device 906 is, for example, provided on the information processing device 900, and connected to the input/output interface 905 within the information processing device 900. A keyboard, a mouse, a keypad, a touch panel, a microphone, an operating button, a directional key, a rotational selector such as a jog dial, or a combination thereof, can be given as examples of the operation input device 906. The operation input device 906 functions as the input unit 240 of the data registration device 200 or the input unit 340 of the data usage device 300.

The display device 907 is, for example, provided on the information processing device 900, and connected to the input/output interface 905 within the information processing device 900. A liquid crystal display, an organic EL display (Organic Electro-Luminescence Display), and the like can be given as examples of the display device 907. The display device 907 functions as the output unit 250 of the data registration device 200 or the output unit 350 of the data usage device 300.

It goes without saying that the input/output interface 905 can be connected to an external device such as an operation input device external to the information processing device 900, an external display device, and the like. The display device 907 may be a device capable of both display and user operations, such as a touch panel, for example.

The communication interface 908 is a communication means included in the information processing device 900, and functions as the communication unit 130 of the node device 100, the communication unit 230 of the data registration device 200, or the communication unit 330 of the data usage device 300. The communication interface 908 may have a function of communicating wirelessly or over a wire with a given external device such as a server over a given network (or directly). A communication antenna and an RF (Radio Frequency) circuit (wireless communication), an IEEE 802.15.1 port and a transmission/reception circuit (wireless communication), an IEEE 802.11 port and a transmission/reception circuit (wireless communication), a LAN (Local Area Network) terminal and a transmission/reception circuit (wired communication), and the like can be given as examples of the communication interface 908.

Note that the hardware configuration of the information processing device 900 is not limited to the configuration illustrated in Fig. 20. For example, if the information processing device 900 performs communication via a connected external communication device, the communication interface 908 need not be provided. Additionally, the communication interface 908 may be configured to be capable of communicating through a plurality of communication methods. Additionally, the information processing device 900 need not include the operation input device 906, the display device 907, or the like, for example. Additionally, part or all of the configuration illustrated in Fig. 20 may be realized by one, or two or more, ICs (Integrated Circuits), for example.

### <3. Conclusion>

As has been described thus far, the node device 100 has a function which can automatically set privileges of data which is to be registered in the P2P database 120. To be more specific, by analyzing data which is to be registered in the P2P database 120, the node device 100 can specify a target pertaining to the data and set privileges of the data for that target. Through this, even if there are multiple data owners, the creator and the user of the data are different, and so on, the node device 100 can automatically set the privileges of the data for the plurality of targets.

Additionally, on the basis of first data to be registered in the P2P database 120, the node device 100 can control the association of that first data with second data that is to be registered in the P2P database 120 and that is different from the first data. Through this, the node device 100 can recognize relationships between data registered in the P2P database 120, implement various types of processing (e.g., providing rewards and the like) based on the utilization state of each instance of data, and the like. Furthermore, the node device 100 can set privileges of the first data on the basis of privileges of the original second data by associating the first data and the second data. Through this, for example, the issuer of the second data can obtain privileges of the first data generated on the basis of the second data.

Although preferred embodiments of the present disclosure have been described in detail with reference to the accompanying drawings, the technical scope of the present disclosure is not limited to these examples. It will be clear that various changes and modifications can be arrived at by a person of ordinary skill in the technical field of the present disclosure without departing from the technical concepts disclosed in the scope of claims, and such changes and modifications are of course to be understood as falling within the technical scope of the present disclosure.

Furthermore, the effects described in the present specification are provided merely for explanatory purposes or as examples, and are not limiting. In other words, the techniques according to the present disclosure can provide other effects which will be clear to one skilled in the art from the present specification, along with or instead of the effects described above.

Note that configurations such as the following also fall within the technical scope of the present disclosure.
(1) An information processing device including:
   an association processing unit that, on the basis of first data to be registered in a P2P database, controls association of the first data with second data that is to be registered in the P2P database and that is different from the first data.
(2) The information processing device according to (1), wherein
   the association processing unit controls association of the first data with the second data that is already registered in the P2P database.
(3) The information processing device according to (1) or (2), wherein
   the first data is data generated on the basis of the second data.
(4) The information processing device according to (3), wherein
   the first data includes relation information indicating that the first data is related to the second data, and the association processing unit associates the first data and the second data on the basis of the relation information.
(5) The information processing device according to (3), wherein
   the association processing unit associates the first data and the second data on the basis of an analysis result pertaining to the first data being related to the second data.
(6) The information processing device according to (5), wherein
   the association processing unit associates the first data and the second data on the basis of the first data containing all or some of similar parts of the second data.
(7) The information processing device according to any one of (1) to (6), wherein
   the association processing unit associates the first data and the second data using association information indicating association of the first data and the second data, and the association information is managed separate from the first data and the second data.
(8) The information processing device according to (7), wherein
   the association information is registered in the P2P database.
(9) The information processing device according to any one of (1) to (8), further including:
   a privilege processing unit that specifies a target pertaining to the first data by analyzing the first data, and sets a privilege of the first data for the target.
(10) The information processing device according to (9), wherein
   the privilege processing unit sets the privilege of the first data on the basis of a privilege of the second data.
(11) The information processing device according to (10), wherein
   the privilege processing unit sets the privilege of the first data on the basis of a target pertaining to the second data.
(12) The information processing device according to any one of (9) to (11), wherein
   the privilege processing unit sets the privilege of the first data by setting privilege information indicating the privilege of the first data, and
   the privilege information is managed separate from the first data and the second data.
(13) The information processing device according to (12), wherein
   the privilege information is registered in the P2P database.
(14) The information processing device according to any one of (9) to (13), wherein
   the target pertaining to the first data is at least one of a target related to details of the first data, a target that provides the first data, or a target that is provided with the first data.
(15) The information processing device according to any one of (9) to (14), wherein
   at least one of the association processing unit or the privilege processing unit is provided in the P2P database, and is embodied by a predetermined program that is run by the P2P database.
(16) The information processing device according to any one of (1) to (15), wherein
   the P2P database is blockchain data.
(17) An information processing method executed by a computer, the method including: controlling, on the basis of first data to be registered in a P2P database, association of the first data with second data that is to be registered in the P2P database and that is different from the first data.
(18) A program for causing a computer to implement:
   controlling, on the basis of first data to be registered in a P2P database, association of the first data with second data that is to be registered in the P2P database and that is different from the first data.

### [Reference Signs List]

- 100: Node device
- 110: Control unit
- 120: P2P database
- 121: P2P database program
- 121a: Privilege processing unit
- 121b: Association processing unit
- 130: Communication unit
- 200: Data registration device
- 300: Data usage device
- 210, 310: Control unit
- 211, 311: Data generating unit
- 212, 312: Request generating unit
- 220, 320: Storage unit
- 230, 330: Communication unit
- 240, 340: Input unit
- 250, 350: Output unit
- 400: P2P network

## Claims

1. An information processing device comprising:
an association processing unit that, on the basis of first data to be registered in a P2P database, controls association of the first data with second data that is to be registered in the P2P database and that is different from the first data.

2. The information processing device according to claim 1, wherein
the association processing unit controls association of the first data with the second data that is already registered in the P2P database.

3. The information processing device according to claim 1, wherein
the first data is data generated on the basis of the second data.

4. The information processing device according to claim 3, wherein
the first data includes relation information indicating that the first data is related to the second data, and
the association processing unit associates the first data and the second data on the basis of the relation information.

5. The information processing device according to claim 3, wherein
the association processing unit associates the first data and the second data on the basis of an analysis result pertaining to the first data being related to the second data.

6. The information processing device according to claim 5, wherein
the association processing unit associates the first data and the second data on the basis of the first data containing all or some of similar parts of the second data.

7. The information processing device according to claim 1, wherein
the association processing unit associates the first data and the second data using association information indicating association of the first data and the second data, and
the association information is managed separate from the first data and the second data.

8. The information processing device according to claim 7, wherein
the association information is registered in the P2P database.

9. The information processing device according to claim 1, further comprising:
a privilege processing unit that specifies a target pertaining to the first data by analyzing the first data, and sets a privilege of the first data for the target.

10. The information processing device according to claim 9, wherein
the privilege processing unit sets the privilege of the first data on the basis of a privilege of the second data.

11. The information processing device according to claim 10, wherein
the privilege processing unit sets the privilege of the first data on the basis of a target pertaining to the second data.

12. The information processing device according to claim 9, wherein
the privilege processing unit sets the privilege of the first data by setting privilege information indicating the privilege of the first data, and
the privilege information is managed separate from the first data and the second data.

13. The information processing device according to claim 12, wherein
the privilege information is registered in the P2P database.

14. The information processing device according to claim 9, wherein
the target pertaining to the first data is at least one of a target related to details of the first data, a target that provides the first data, or a target that is provided with the first data.

15. The information processing device according to claim 9, wherein
at least one of the association processing unit or the privilege processing unit is provided in the P2P database, and is embodied by a predetermined program that is run by the P2P database.

16. The information processing device according to claim 1, wherein
the P2P database is blockchain data.

17. An information processing method executed by a computer, the method comprising:
controlling, on the basis of first data to be registered in a P2P database,
association of the first data with second data that is to be registered in the P2P database and that is different from the first data.

18. A program for causing a computer to implement:
controlling, on the basis of first data to be registered in a P2P database,
association of the first data with second data that is to be registered in the P2P database and that is different from the first data.
